# EUROPÄISCHE PATENTSCHRIFT

(11) **EP 1 268 321 B1**
(45) Veröffentlichungstag und Bekanntmachung des Hinweises auf die Patenterteilung: **23.06.2004**
(21) Anmeldenummer: 01936069.2
(22) Anmeldetag: 13.03.2001
(51) Int. Cl.: B65G 1/02

(54) **KAROSSENHOCHREGALLAGER**
HIGH-BAY RACKING FOR VEHICLE BODIES
ENTREPOT A RAYONNAGES EN HAUTEUR POUR CARROSSERIES

(30) Priorität: 15.03.2000 DE 10012693
(43) Veröffentlichungstag der Anmeldung: 02.01.2003
(73) Patentinhaber: Helmut Lehmer GmbH Stahl- und Maschinenbau, 92436 Bruck/Opf. (DE)
(72) Erfinder: PLATZER, Fritz, 72654 Neckartenzlingen (DE); WERNER, Marc, Oliver, 73728 Esslingen (DE)
(74) Vertreter: Hössle Kudlek & Partner
(86) Internationale Anmeldenummer: PCT/EP2001/002799
(87) Internationale Veröffentlichungsnummer: WO 2001/068485

(56) Entgegenhaltungen:
- US-A- 4 307 985
- US-A- 5 312 004
- US-A- 5 377 851
- PATENT ABSTRACTS OF JAPAN vol. 010, no. 204 (M-499), 17. Juli 1986 (1986-07-17) -& JP 61 045807 A (HITACHI LTD), 5. März 1986 (1986-03-05)

## Beschreibung

Die vorliegende Erfindung betrifft ein Karossenhochregallager mit einer Anzahl von übereinander angeordneten Regalfächern.

Derartige Karossenhochregallager sind bekannt und werden zur Lagerung bzw. Zwischenlagerung von insbesondere lakkierten Karosserien verwendet. Dabei muß darauf geachtet werden, daß bei in dem Hochregallager übereinander angeordneten Karossen in einem unteren Fach eingebrachte Karossen vor von darüber angeordneten Karossen abtropfenden Flüssigkeiten wie Wachs etc. geschützt werden. Dazu ist es bekannt, die einzelnen Lagerfächer des Karossenhochregallagers mit Tropfwannen aus Folie oder Stahlblech oder einem Gitterrost mit einer Folienbelegung auszustatten. Dazu muß zur praxistauglichen Gestaltung des Tropfschutzes entweder ein Spannrahmen (zur Anpassung der Folie an eine eventuell notwendige Kontur, ohne daß die Folie durchhängt) oder eine rahmenartige Verstärkungskonstruktion (zur Verhinderung eines Durchhängens des Blechs) vorgesehen sein.

Ein Hochregallager ist durch die US-A-5 312 004 bekannt.

Demgegenüber wird erfindungsgemäß ein Karossenhochregallager mit den Merkmalen des Anspruchs 1 vorgeschlagen.

Das erfindungsgemäße Karossenhochregallager weist eine Anzahl von übereinander angeordneten Regalfächern auf, wobei im unteren Bereich jedes Regalfachs ein Tropfschutz vorgesehen ist. Hierzu sind zwei parallel zueinander ausgerichtete Längsprofile vorgesehen, die an ihren einander zugewandten Seiten jeweils eine nutenförmige, entlang des Längsprofils verlaufende Öffnung aufweisen, in die der Tropfschutz eingesetzt ist.

Eine bevorzugte Ausführungsform des erfindungsgemäßen Karossenhochregallagers sieht vor, in einem unteren Bereich jedes Regalfachs sich parallel zur Längsachse des Regalfachs erstreckende C-Profile anzuordnen, deren Öffnungen zum Regalfachinnern weisen. Auf diese ersten C-Profile sind quer zur Längsachse des Regalfachs angeordnete zweite C-Profile aufgesetzt, die zum Aufsetzen einer zu lagernden Karosse dienen. Bevorzugt wird zusätzlich eine Traverse benutzt, so daß die zweiten C-Profile zum Aufsetzen der die zu lagernde Karosse tragenden Traverse dienen. Die Traverse wird beispielsweise im Schwellerbereich an die zu lagernde Karosse angesetzt.

In die offenen Seiten der ersten, in Längsrichtung angeordneten C-Profile ist ein die gesamte Fläche des Regalfachs bedeckender flächig ausgebildeter Tropfschutz eingesetzt. Bei dem Tropfschutz kann es sich um eine Folie und/oder ein Trapezblech handeln, wobei bei Auswahl eines geeigneten Trapezbleches sogar eine Begehung der Fläche des Regalfachs möglich wäre. Die Tropfschutzfolie bzw. das Tropfschutzblech ist direkt von einer Rolle abgezogen und erstreckt sich über sämtliche in Längsrichtung hintereinander angeordnete Regalfächer. Die Rolle ist an einer Seite des Karossenhochregallagers im Bereich der Bodenebene jedes Regalfachstockwerks auswechselbar angeordnet.

In einer bevorzugten Ausführungsform der Erfindung ist in die Öffnungen der Längsprofile ein Trapezblech eingesetzt, auf dem als Tropfschutz die Folie ausgelegt ist.

Durch die erfindungsgemäße Ausgestaltung eines Karossenhochregallagers wird zum einen durch Ausbildung einer in längs angeordneten C-Profilen geführten Tropfschutzfläche ein Schutz darunterliegender Karosserien vor herabtropfenden Flüssigkeiten gegeben, andererseits wird die Reinigung bzw. Erneuerung der Tropfschutzfläche vereinfacht, da bei Erreichen des maximal zulässigen Verschmutzungsgrades der Tropfschutzfläche die Folie bzw. das Blech an dem der Rolle gegenüberliegenden Regalende gegriffen und abgezogen werden kann, bis jedes der längs hintereinander angeordneten Regalfächer des Karossenhochlagers wieder mit neuer Tropfschutzfolie bzw. neuem Tropfschutzblech unterlegt ist. Dieser Vorgang kann manuell oder automatisiert erfolgen. Die verschmutzte Folie wird dann abgeschnitten und entsorgt. Bei einem Rollenwechsel wird die neue Folie vorteilhafterweise an das Ende der alten, verschmutzten Folie angeklebt und durch Herausziehen der verschmutzten Folie am gegenüberliegenden Regalende durch die gesamte Regalfläche eingezogen. Als besonders vorteilhaft erweist sich, daß eine Erneuerung der Tropfschutzfläche in dem erfindungsgemäßen Karossenhochregallager auch bei belegten Regalfächern möglich ist und insbesondere bei einem motorisch angetriebenen Herausziehen ein Wechsel der Tropfschutzfläche auch während eines vollautomatischen Betriebs des Lagers ohne Unterbrechung möglich ist, da keine Bedienpersonen in den abgesicherten Lagerbereich treten müssen. Dadurch kann eine deutliche Reduzierung der Stillstandzeit des Hochregallagers erzielt werden. Auch der Wechsel der Tropfschutzfläche an sich ist mit deutlich geringerem Zeitaufwand realisierbar.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt ein Ausführungsbeispiel eines erfindungsgemäßen Karossenhochregallagers im Ausschnitt in perspektivischer Darstellung.
- Figur 2: zeigt eine Draufsicht auf eine Stirnseite des Karossenhochregallagers der Figur 1 gemäß der in Figur 1 eingezeichneten Blickrichtung.
- Figur 3: zeigt einen Ausschnitt aus der Darstellung der Figur 2.

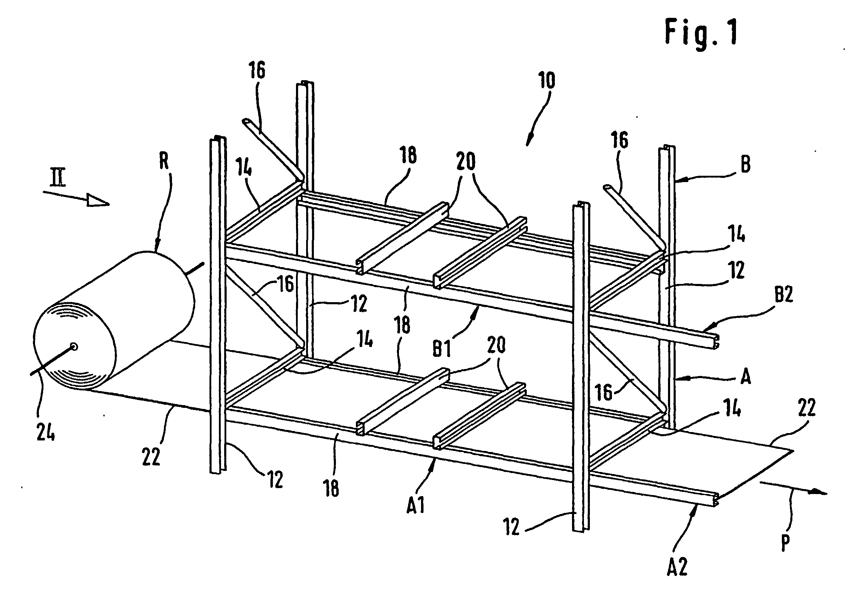

Figur 1 zeigt ein erfindungsgemäßes Karossenhochregallager in schematischer perspektivischer Darstellung. Das Karossenhochregallager 10 ist stirnseitig jeweils aus senkrecht angeordneten Profilen 12 (Steher), Horizontalverbindern 14 und diagonal verlaufenden Rohrprofilen 16 als fachwerkartige Regalleiter aufgebaut. Die beschriebenen fachwerkartig aufgebauten Regalleitern 12, 14, 16 des Karossenhochregallagers 10 sind in Längsrichtung mit C-Profilen 18 miteinander verbunden, deren Öffnung zur Innenseite jedes Regalfachs weist. Auf diesen ersten C-Profilen 18 sind in Querrichtung zweite C-Profile 20 aufgesetzt, auf denen im Betrieb des Karossenhochregallagers 10 die Karossen mittels einer insbesondere im Schwellerbereich angreifenden Traverse aufgesetzt werden können.

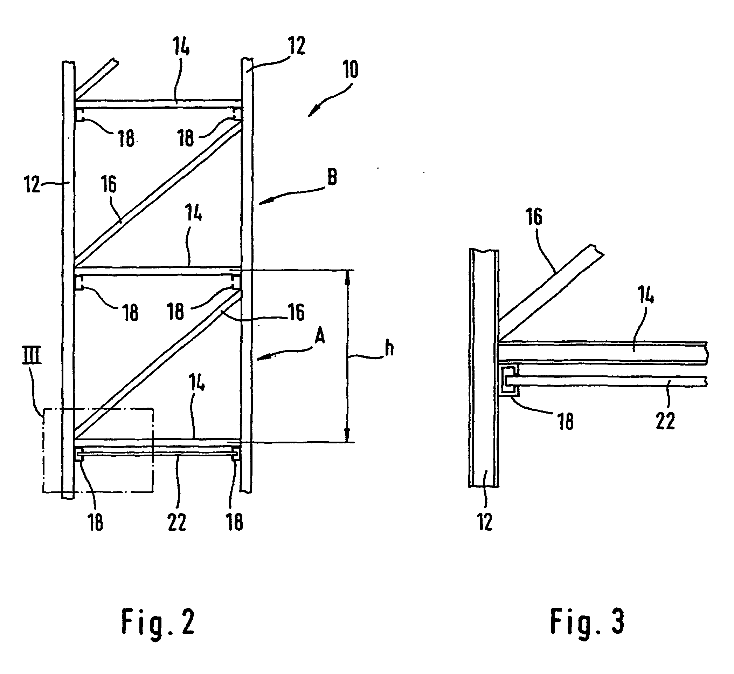

Der in Figur 1 dargestellte Ausschnitt des Karossenhochregallagers 10 zeigt ein erstes Stockwerk A und im Ansatz ein darüber angeordnetes zweites Stockwerk B. Im ersten Stockwerk A ist ein erstes Regalfach A1 ausgebildet, an das sich in Längsrichtung des Regalfachs gesehen ein zweites, nur im Ausschnitt dargestelltes zweites Regalfach A2 anschließt (in der Darstellung der Figur 1 rechts von dem ersten Regalfach A1). Das Karossenhochregallager 10 umfaßt eine Vielzahl von übereinander und in Längsrichtung hintereinander angeordneten Regalfächern, von denen aus Gründen der Übersichtlichkeit nur das Regalfach A1 vollständig und die benachbarten Regalfächer A2, B1, B2 nur teilweise dargestellt sind. Die Beschreibung des erfindungsgemäßen Karossenhochregallagers 10 erfolgt nachfolgend unter Bezugnahme auf die Figuren 1 bis 3 speziell für das Stockwerk A und das Regalfach A1.

Zum Schutz der Karosserien vor Flüssigkeiten, die von darüber angeordneten Karossen herabtropfen, ist als Tropfschutz eine flächige Folie bzw. ein Blech 22 vorgesehen. Bei dem Tropfschutz handelt es sich vorzugsweise um ein DIN-Trapezblech. Zur Vereinfachung der Beschreibung wird nachfolgend der Tropfschutz als Trapezblech 22 bezeichnet, was jedoch nur beispielhaft und nicht einschränkend gemeint ist.

Das Trapezblech 22 entspricht mit seiner Breite im wesentlichen der Breite des Karossenhochregallagers 10. Das Trapezblech 22 wird von der Rolle direkt in die Öffnungen der C-Profile 18 eingesetzt und in diesen geführt über die gesamte Länge des Karossenhochregallagers 10 gezogen, so daß sich in den in Längsrichtung hintereinander anschließenden Regalfächern A1, A2, ... eine durchgehende Fläche ergibt. Die Rolle R, von der das Trapezblech 22 abgezogen wird, ist auf der Höhe des entsprechenden Stockwerks A im Bereich eines ersten Stirnendes des Karossenhochregallagers 10 um eine Achse 24 drehbar angeordnet.

Wie bereits beschrieben bildet das Trapezblech somit eine geschlossene Fläche, die bei entsprechenden Eigenschaften des Trapezbleches sogar begehbar ist. Zum Wechsel der Tropfschutzfläche, beispielsweise wenn diese einen maximal zulässigen Grad an Verschmutzung erreicht hat, wird diese an dem der Rolle R gegenüberliegenden Stirnende des Karossenhochregallagers 10 gegriffen und im Sinne des eingezeichneten Pfeiles P soweit abgezogen, bis die gesamte Länge durch frisches Trapezblech bzw. frische Folie ersetzt ist und wird daraufhin abgeschnitten. Dieser Vorgang kann sowohl manuell als auch automatisiert erfolgen.

Selbstverständlich ist die Erfindung nicht auf das dargestellte Ausführungsbeispiel beschränkt. Insbesondere liegt es im Bereich des fachmännischen Könnens, zur Halterung und Führung des Trapezblechs andere Mittel heranzuziehen als die beschriebenen C-Profile.

## Patentansprüche

1. Karossenhochregallager (10) mit einer Anzahl von übereinander angeordneten Regalfächern (A1, A2, B1, B2), wobei im unteren Bereich jedes Regalfachs (A1, A2, B1, B2) zwei parallel zueinander ausgerichtete Längsprofile (18) vorgesehen sind, **dadurch gekennzeichnet, daß** die Längsprofile an ihren einander zugewandten Seiten jeweils eine nutenförmige, entlang des Längsprofils (18) verlaufende Öffnung aufweisen, in die ein Tropfschutz eingesetzt ist.

2. Karossenhochregallager (10) nach Anspruch 1, bei dem als Längsprofile (18) erste C-Profile (18) dienen, deren Öffnungen zur Innenseite des jeweiligen Regalfachs (A1, A2, B1, B2) weisen.

3. Karossenhochregallager (10) nach Anspruch 1 oder 2, bei dem als Tropfschutz eine Folie dient.

4. Karossenhochregallager (10) nach Anspruch 1 oder 2, bei dem als Tropfschutz ein Trapezblech (22) dient.

5. Karossenhochregallager (10) nach Anspruch 3, bei dem in die Öffnungen der Längsprofile (18) ein Trapezblech (22) eingesetzt ist, auf dem die Folie als Tropfschutz ausgelegt ist.

6. Karossenhochregallager (10) nach Anspruch 4 oder 5, bei dem das Trapezblech (22) derart ausgebildet ist, daß eine Begehung möglich ist.

7. Karossenhochregallager (10) nach einem der Ansprüche 1 bis 6, bei dem auf den Längsprofilen (18) quer zu den Längsprofilen (18) Querprofile (20) aufgesetzt sind, die zum Aufsetzen einer zu lagernden Karosse dienen.

8. Karossenhochregallager (10) nach Anspruch 7, bei dem als Querprofile (20) zweite C-Profile (20) dienen.

9. Karossenhochregallager (10) nach einem der Ansprüche 1 bis 8, das stirnseitig aus senkrecht angeordneten Profilen (12), Horizontalverbindern (14) und diagonal verlaufenden Rohrprofilen (16) als fachwerkartige Regalleiter aufgebaut ist.

10. Karossenhochregallager (10) nach Anspruch 9, bei dem die fachwerkartig aufgebauten Regalleitern mit den in Längsrichtung verlaufenden Längsprofilen (18) verbunden sind.

11. Karossenhochregallager (10) nach einem der Ansprüche 1 bis 10, das eine Vielzahl von übereinander und in Längsrichtung nebeneinander angeordneten Regalfächern umfaßt.

12. Karossenhochregallager (10) nach Anspruch 11, bei dem die Längsprofile (18) durchgängig entlang den nebeneinander angeordneten Regalfächern verlaufen.

13. Karossenhochregallager (10) nach einem der Ansprüche 1 bis 12, bei dem der Tropfschutz zum Auswechseln mit einem neuen einzusetzenden Tropfschutz verbindbar ist.

14. Karossenhochregallager (10) nach einem der Ansprüche 1 bis 13, bei dem der neue einzusetzende Tropfschutz auf einer Rolle (R) aufgerollt ist.

## Claims

1. High-bay racking for vehicle bodies (10) having a plurality of racking compartments (A1, A2, B1, B2) arranged above one another, two longitudinal profiles (18) aligned parallel to one another being provided in the lower part of each racking compartment (A1, A2, B1, B2), **characterised in that** the longitudinal profiles each comprise, on their sides facing one another, a groove-shaped opening running along the longitudinal profile (18) in which a drip protector is inserted.

2. High-bay racking for vehicle bodies (10) according to claim 1, wherein first C-shaped profiles (18) are used as the longitudinal profiles (18), the openings of which face the inside of the particular racking compartment (A1, A2, B1, B2).

3. High-bay racking for vehicle bodies (10) according to claim 1 or 2, wherein a foil acts as the drip protector.

4. High-bay racking for vehicle bodies (10) according to claim 1 or 2, wherein a trapezoidal metal sheet (22) acts as the drip protector.

5. High-bay racking for vehicle bodies (10) according to claim 3, wherein a trapezoidal metal sheet (22) on which the foil is arranged as a drip protector is inserted in the openings in the longitudinal profiles (18).

6. High-bay racking for vehicle bodies (10) according to claim 4 or 5, wherein the trapezoidal metal sheet (22) is constructed so that it can be walked upon.

7. High-bay racking for vehicle bodies (10) according to one of claims 1 to 6, wherein transverse profiles (20) which serve to support a vehicle body to be mounted thereon are positioned on the longitudinal profiles (18) transversely with respect to said longitudinal profiles (18).

8. High-bay racking for vehicle bodies (10) according to claim 7, wherein second C-shaped profiles (20) are used as the transverse profiles (20).

9. High-bay racking for vehicle bodies (10) according to one of claims 1 to 8, which is made up at its end face of vertically positioned profiles (12), horizontal connectors (14) and diagonally extending tube profiles (16) as truss-like racking members.

10. High-bay racking for vehicle bodies (10) according to claim 9, wherein the truss-like racking members are connected to the longitudinal profiles (18) running in the longitudinal direction.

11. High-bay racking for vehicle bodies (10) according to one of claims 1 to 10, which comprises a multitude of racking compartments arranged one above the other and side by side in the longitudinal direction.

12. High-bay racking for vehicle bodies (10) according to claim 11, wherein the longitudinal profiles (18) run continuously along the racking compartments arranged side by side.

13. High-bay racking for vehicle bodies (10) according to one of claims 1 to 12, wherein for replacement purposes the drip protector can be connected to a new drip protector about to be installed.

14. High-bay racking for vehicle bodies (10) according to one of claims 1 to 13, wherein the new drip protector to be installed is rolled on a roller (R).

## Revendications

1. Entrepôt à rayonnages en hauteur pour carrosseries (10) comprenant un certain nombre de rayons à étagères (A1, A2, B1, B2) agencés les uns au-dessus des autres, dans lequel deux profilés longitudinaux (18) orientés parallèlement l'un à l'autre sont prévus dans la partie inférieure de chaque rayon à étagère (A1, A2, B1, B2), **caractérisé en ce que** les profilés longitudinaux présentent respectivement sur leurs côtés tournés l'un vers l'autre une ouverture en forme de rainure qui s'étend le long du profilé longitudinal (18) et dans laquelle une protection anti-gouttes est mise en place.

2. Entrepôt à rayonnages en hauteur pour carrosseries (10) selon la revendication 1, dans lequel des premiers profilés en C (18) dont les ouvertures sont tournées vers le côté intérieur du rayon à étagère respectif (A1, A2, B1, B2), servent de profilés longitudinaux (18).

3. Entrepôt à rayonnages en hauteur pour carrosseries (10) selon l'une ou l'autre des revendications 1 et 2, dans lequel un film sert de protection anti-gouttes.

4. Entrepôt à rayonnages en hauteur pour carrosseries (10) selon l'une ou l'autre des revendications 1 et 2, dans lequel une tôle à ondes trapéoïdales (22) sert de protection anti-gouttes.

5. Entrepôt à rayonnages en hauteur pour carrosseries (10) selon la revendication 3, dans lequel une tôle à ondes trapéoïdales (22) sur laquelle le film est conçu comme protection anti-gouttes, est mise en place dans les ouvertures des profilés longitudinaux (18).

6. Entrepôt à rayonnages en hauteur pour carrosseries (10) selon l'une ou l'autre des revendications 4 et 5, dans lequel la tôle à ondes trapéoïdales (22) est réalisée de sorte qu'on puisse marcher dessus.

7. Entrepôt à rayonnages en hauteur pour carrosseries (10) selon l'une des revendications 1 à 6, dans lequel des profilés transversaux (20) sont placés sur les profilés longitudinaux (18) perpendiculairement aux profilés longitudinaux (18) et servent à la pose d'une carrosserie à stocker.

8. Entrepôt à rayonnages en hauteur pour carrosseries (10) selon la revendication 7, dans lequel des seconds profilés en C (20) servent de profilés transversaux (20).

9. Entrepôt à rayonnages en hauteur pour carrosseries (10) selon l'une des revendications 1 à 8, réalisé comme échelles d'étagère en forme de treillis, se composant sur la face frontale de profilés (12) agencés perpendiculairement, d'entretoises horizontales (14) et de profilés tubulaires (16) s'étendant en diagonale.

10. Entrepôt à rayonnages en hauteur pour carrosseries (10) selon la revendication 9, dans lequel les échelles d'étagère montées en forme de treillis sont reliées aux profilés longitudinaux (18) s'étendant en direction longitudinale.

11. Entrepôt à rayonnages en hauteur pour carrosseries (10) selon l'une des revendications 1 à 10, comprenant une pluralité de rayons à étagères agencés les uns au-dessus des autres et les uns à côté des autres en direction longitudinale.

12. Entrepôt à rayonnages en hauteur pour carrosseries (10) selon la revendication 11, dans lequel les profilés longitudinaux (18) s'étendent en continu le long des rayons à étagères agencés les uns à côté des autres.

13. Entrepôt à rayonnages en hauteur pour carrosseries (10) selon l'une des revendications 1 à 12, dans lequel la protection anti-gouttes à remplacer peut être reliée à une nouvelle protection anti-gouttes à mettre en place.

14. Entrepôt à rayonnages en hauteur pour carrosseries (10) selon l'une des revendications 1 à 13, dans lequel la nouvelle protection anti-gouttes à mettre en place est enroulée sur un rouleau (R).
